# EUROPÄISCHE PATENTANMELDUNG

(11) **EP 3 059 569 A2**
(43) Veröffentlichungstag der Anmeldung: **24.08.2016**
(21) Anmeldenummer: 16401010.0
(22) Anmeldetag: 17.02.2016
(51) Int. Cl.: G01M 13/02

(54) **VERFAHREN ZUR TEILPHYSIKALISCHEN ECHTZEITSIMULATION**

(30) Priorität: 17.02.2015 DE 102015003382
(71) Anmelder: Karlsruher Institut für Technologie, 76131 Karlsruhe (DE)
(72) Erfinder: Babik, Adam, 70499 Stuttgart (DE); Stier, Christian, 76684 Östringen (DE); Geier, Martin, 76139 Karlsruhe (DE)

(57) **Zusammenfassung**

Die Erfindung bezieht sich auf ein Verfahren zur teilphysikalischen Echtzeitsimulation (HIL) eines Verbrennungsmotors als Belastungseinrichtung zum Prüfen eines Prüflings (Antriebsteilsystems) 1.3, bei dem ein realer Verbrennungsmotor durch einen elektrischen Antriebsmotor als Prüfstandmotor 1.1 ersetzt und simuliert wird, wobei verschiedene Motorgrößen dem Grunde nach und der Charakteristik nach simuliert werden, wobei
- ein kompilierungsfreies Ausgangsmodell verwendet wird;
- eine code-freie Modellkonfiguration verwendet wird;
- eine Deaktivierung abgeschlossener Vorgänge erfolgt;
- ein paralleles Simulieren der einzelnen Motorparameter erfolgt;
- die Motorgrößen in Echtzeit kennfeldfrei parametriert werden.

## Beschreibung

Die Erfindung bezieht sich auf ein Verfahren zur teilphysikalischen Echtzeitsimulation (HIL) eines Verbrennungsmotors als Belastungseinrichtung zum Prüfen eines Prüflings wie ein Antriebsteilsystem, bei dem ein realer Verbrennungsmotor durch einen elektrischen Antriebsmotor als Prüfstandmotor ersetzt und simuliert wird, wobei verschiedene Motorgrößen dem Grunde nach und der Charakteristik nach simuliert werden.

Als nächstliegender Stand der Technik ist auszugehen von HIL Simulatoren (Hardware-In-the-Loop) betreffend die Echtzeitsimulation von Antriebssystemen oder Antriebsteilsystemen für die Entwicklung von Steuergeräten einerseits und Echtzeit-Verbrennungsmotorsimulationen, denen eine kennfeldbasierte Charakteristik der Motorgrößen zugrunde liegt.

Der Einsatz von Echtzeitmodellen ist bei der Entwicklung und Validierung von Steuergeräten und Fahrzeugkommunikationssystemen weit verbreitet. In HIL-Simulatoren wird das Steuergerät in Wechselwirkung mit einem Echtzeitmodell der zu steuernden Antriebskomponenten bzw. des gesamten Antriebssystems betrieben. Es gibt verschiedene Umsetzungen von Echtzeit-Verbrennungsmotorsimulation zur Anwendung in der Motorsteuergerätentwicklung, d.h. ohne Darstellung der Motorcharakteristik durch elektrische Prüfstandsantriebe.

Vorrangig aus dem Bereich des HIL-Tests sind Entwicklungsplattformen mit der Möglichkeit zur Echtzeitsimulation von Antriebsteilsystemen und Kommunikation über Feldbussysteme entstanden.

Im Bereich der Antriebsstrangprüfstände ist mittlerweile der Einsatz hochdynamischer elektrischer Antriebsmotoren anstelle realer Verbrennungsmotoren verbreitet. Der Detaillierungsgrad der Verbrennungsmotorabbildung reicht dabei, abhängig von der Zielsetzung der jeweiligen Validierungsaktivität, von der Aufprägung eines betriebspunktabhängigen mittleren Verbrennungsmotormoments bis hin zur Vorgabe des dynamischen Drehmomentverlaufs mit Berücksichtigung der verbrennungsinduzierten Ungleichförmigkeiten.

Erste Möglichkeiten, das Anregungsverhalten unabhängig vom realen Verbrennungsmotor abzubilden, wurden durch mechanische Mechanismen wie der bewussten Nutzung des Kardanfehlers oder der Leistungsübertragung über unrunde Zahnräder erreicht. Nachteile dieser Mechanismen sind z.B. die starre Kopplung der Anregungsfrequenz an die Betriebsdrehzahl und daraus resultierend eine Einschränkung der abbildbaren Verbrennungsmotortypen.

Moderne hochdynamische Prüfstandmotoren erlauben die direkte Darstellung von Drehungleichförmigkeiten. Die Verbrennungsmotorabbildung wird entweder durch Kopplung zweier elektrischer Synchronmotoren oder durch die Nutzung von Direktantrieben erreicht.

Die Sollwertvorgabe erfolgt meist durch generische Abbildung der Verbrennungsmotorcharakteristik mit einer harmonischen Schwingung oder durch kennfeldbasierte Methoden. Herausforderung dabei ist die Gewährleistung einer hochfrequenten Sollwerterzeugung und -übermittlung an die Leistungselektronik.

Braun beschreibt die Hinterlegung von Kennfeldern für die Gas- und Massekräfte des Verbrennungsmotors, die in einem Echtzeitsystem betriebspunktabhängig skaliert und überlagert werden. Darüber hinaus wird die zusätzliche Simulation des Torsionsschwingungsdämpfers angeführt, die aus Rechenzeitgründen ebenfalls kennfeldbasiert erfolgt (BRAUN, H.; BRODBECK, P.; KNEWITZ, H.; PFEIFFER, M.; TRANXUAN, H.: Vorstellung eines Antriebsstrangprüfstands mit elektrischem Antrieb für die Simulation des Verbrennungsmotors, in: VDI-Berichte, Bd. 1990, 2007).

Ein weiterer Ansatz zur Beschreibung des Motorverhaltens und zur hochfrequenten Erzeugung von Sollwertvorgaben ist die Fourier-Zerlegung der verbrennungsmotorischen Anregung bei verschiedenen Last- und Drehzahlbetriebspunkten. Daraus werden die betriebspunktabhängigen Sollwerte aus Interpolation und Rücktransformation in den Zeitbereich ermittelt.

Weiter ist bekannt die Kennlinienermittlung zur Verbrennungsmotorsimulation auf Basis der Triebwerksdynamik, der thermodynamischen Kompressions- und Expansionsgleichungen und einer Approximation der Verbrennungsdynamik.

Aus der DE 11 2005 002 837 T5 ist u. a. ein Motorsimulationsverfahren bekannt, das notwendig ist für die Simulation eines Steuerungssystems.

Ungeachtet der veralteten mechanischen Lösungen zur Verbrennungsmotorabbildung lassen sich die Lösungen zur elektrischen Verbrennungsmotorsimulation im Stand der Technik prinzipiell in zwei Kategorien einteilen:

### 1. Generische Anregung

In vielen Fällen wird die Drehmomentcharakteristik, bestehend aus mittlerem Drehmoment und überlagerten dynamischen Frequenzanteilen, generisch, d.h. durch eine Signalgenerator-Funktionalität abgebildet. Dabei besteht kein direkter Zusammenhang zwischen den eingestellten Kurvenverläufen und den physikalischen Parametern des Verbrennungsmotors, d.h. die Abbildungsqualität ist gering und hängt stark von Erfahrungswerten ab. Gleichwohl erlauben in der Prüfstandsautomatisierung integrierte Signalgeneratoren meist eine sehr flexible Veränderung der Kurvencharakteristik zur Laufzeit.

### 2. Kennfeldbasierte Methoden

Um einen stärkeren Bezug zwischen den Motorparametern wie Hubraum und Zylinderzahl und der abgebildeten Kurvencharakteristik herzustellen, liegt den kennfeldbasierten Ansätzen eine Offline-Simulation des Verbrennungsmotors zugrunde. Aus dieser Offline-Simulation werden Kennfelder, z.B. mit den Frequenzanteilen als Fourier-Zerlegung, oder charakteristische Kurvenverläufe über ein komplettes Arbeitsspiel des Motors erzeugt.

Diese Kennfelder und Kurvenverläufe werden in die Prüfstandsleistungselektronik integriert. Im Betrieb erfolgt eine Rekonstruktion der Verbrennungsmotorcharakteristik, z.B. durch inverse Fouriertransformation oder durch Skalierung und Interpolation der hinterlegten Kurvenverläufe. Der Nachteil dieser Vorgehensweisen liegt darin, dass sich an der Motorcharakteristik selbst kaum Änderungen zur Laufzeit vornehmen lassen. Die Veränderung der hinterlegten Kennfelder erfolgt im Standby-Betrieb des Prüfstandes, Parametervariationen am Motor erfordern wenig praktikable Handlungsabläufe von Offline-Simulation über Kennfeldextraktion bis hin zur Übertragung an die Leistungselektronik.

Beide Ansätze haben darüber hinaus nur eingeschränkte Möglichkeiten, Wechselwirkungen zwischen Prüfling und simuliertem Verbrennungsmotor abzubilden, die z.B. bei Startvorgängen und Resonanzdurchläufen entscheidend sind. Auch neuartige Betriebszustände wie die Zylinderabschaltung lassen sich nur beschränkt, z.B. durch Kennfeldumschaltung, abbilden, ebenso ist die Darstellung von Funktionsstörungen wie Fehlzündungen, die erheblichen Einfluss z.B. auf Festigkeit und Schwingungsverhalten haben, nicht möglich.

Die Nachteile des Standes der Technik können wie folgt zusammengefasst werden. Bei der Methode der generischen Anregung besteht kein direkter Zusammenhang zwischen den Simulationsfunktionen einerseits und den physikalischen Parametern des Motors andererseits, d.h. die Abbildungsqualität ist gering. Die damit erreichbare Flexibilität ist jedoch ausreichend bzw. gut. Die kennfeldbasierte Methode hat den Nachteil, dass die simulierte Motorcharakteristik auf Basis von Kennfeldern keine Änderungen während des Betriebes erlaubt. Eine Veränderung der Kennfelder muss im Stand-by-Betrieb erfolgen. Die Parametervariation selbst erfolgt relativ abstrakt ohne direkten Bezug zum Motor und dessen Kenngrößen.

Insgesamt kommt beiden Methoden der Nachteil zu, nur beschränkt Wechselwirkungen zwischen dem Prüfling und dem Verbrennungsmotor abbilden zu können. Dies betrifft wohl insbesondere Motoreigenschaften, die vom Standard bzw. Durchschnittsbetrieb abweichen wie beispielsweise Startvorgänge, Zylinderabschaltung und Fehlzündungen.

Der Erfindung liegt die **Aufgabe** zugrunde, ein Verfahren zur Echtzeitsimulation eines Motors derart auszubilden und anzuordnen, dass Wechselwirkungen zwischen dem Prüfling und dem Verbrennungsmotor besser abgebildet werden können.

Die Erfindung ist auf dem Gebiet der Produktvalidierung mit Prüfstandssystemen angesiedelt und fokussiert zunächst auf den Bereich der automobilen Antriebe. Durch die Erfindung wird das Verhalten zukünftiger Verbrennungsmotoren, für die es meist noch keine Prototypen gibt, auf Prüfständen für Prüflinge, insbesondere Antriebselemente wie Kupplungen, Getriebe oder komplette Teilantriebssysteme abgebildet. Dadurch sollen frühzeitig Auswirkungen zukünftiger Verbrennungsmotorgenerationen auf das Verhalten des Gesamtfahrzeugs analysiert werden. Als Vorteile sind zu nennen eine Verkürzung der Entwicklungszeit und eine Steigerung der Produktqualität durch frühzeitiges Erkennen und Beheben von kritischen Einflüssen und Wechselwirkungen.

Gelöst wird die Aufgabe erfindungsgemäß dadurch, dass für die Simulation des Verbrennungsmotors und die Ansteuerung des Prüfstandmotors verwendet wird ein kompilierungsfreies Ausgangsmodell und eine code-freie Modellkonfiguration, wobei eine Deaktivierung abgeschlossener Vorgänge und ein paralleles Simulieren der einzelnen Motorparameter erfolgt, wobei die Motorgrößen in Echtzeit kennfeldfrei parametriert werden.

Unter einer Kompilierung wird allgemein der Vorgang einer Übersetzung z.B. von einer formalen Quellsprache wie z.B. eine erste Programmiersprache in eine Zielsprache wie z.B. eine zweite Programmiersprache verstanden. Unter einem Code wird allgemein eine Abbildungsvorschrift verstanden, die jedem Zeichen eines Zeichenvorrats (Urbildmenge) eindeutig ein Zeichen oder eine Zeichenfolge aus einem anderen Zeichenvorrat (Bildmenge) zuordnet.

Eine vor allem strukturelle Umkonfiguration des zu simulierenden Verbrennungsmotors erfolgt im Rahmen des Verfahrens ohne eine Kompilierung und mit einer Code-freien Modellkonfiguration, d.h. lediglich durch Parameteränderung, die im Rahmen einer Ausgestaltung sogar im laufenden Betrieb des Prüfstands erfolgt.

Bisherige kennfeldbasierte Verfahren zur elektrischen Verbrennungsmotorsimulation erfordern dagegen ein Herunterfahren des Prüfstandes, Neuerzeugung bzw. Aktivierung eines neuen Kennfeldes und erneutes Starten des Versuchs. Durch das vorgeschlagene Verfahren sind daher effizientere Versuche und die Möglichkeit zum direkten Vergleich des Verhaltens verschiedener Verbrennungsmotoren gegeben, was gerade für akustische Versuche sehr hilfreich ist.

Durch die Variation physikalischer Motorparameter wie z.B. Hubraum oder Zylinderzahl in Echtzeit unterscheidet sich der Verfahren grundsätzlich von den eingangs genannten generischen Verfahren. Eine generische Vorgabe würde bedeuten, dass der Drehmomentverlauf durch ein mittleres Drehmoment, Drehmomentamplituden und zugehörigen Frequenzen und Phasenverschiebungen definiert würde. Da kein direkter Zusammenhang zwischen den eingestellten Kurvenverläufen und den physikalischen Parametern des Verbrennungsmotors besteht, sind diese Werte auch nicht über üblicherweise bekannten Motordaten direkt ableitbar.

Durch eine Nutzung physikalischer Parameter (Hubraum, Brennstoffmengen, Verdichtungsverhältnis...) im Echtzeitmodell wird im Rahmen des vorgeschlagenen Verfahrens in vorteilhafter Weise eine im Vergleich zu herkömmlichen Verfahren deutlich realistischere Abbildung der Verbrennungsmotor-Charakteristik auf effizienterem Weg erreichbar. Ein grundsätzlicher Ansatz des Verfahrens besteht folglich darin, unter Nutzung eines universellen Echtzeitsimulationsmodells für Verbrennungsmotoren dynamische Drehmomentsollwerte für einen elektrischen Prüfstandantrieb zu erzeugen, damit dieser sich wie ein Verbrennungsmotor verhält. Das vorgeschlagene Verfahren zeichnet sich dadurch aus, dass das Echtzeitmodell auf physikalischen Parametern (Hubraum, Brennstoffmengen, Verdichtungsverhältnis...) beruht, die darüber hinaus online, d.h. bei laufendem Versuch, veränderbar ist.

Ein wichtiger Aspekt des Verfahrens ist der Zugriff auf Modellparameter zur Modell- und damit Versuchslaufzeit. Dies ermöglicht neue Versuchsszenarien, die neben der Abbildung neuartiger Motorbetriebsarten (z.B. Zylinderabschaltung) auch direkte Gegenüberstellungen verschiedener Motorkonfigurationen bei sonst identischen Randbedingungen ermöglichen. Exemplarisch können hierzu Geräuschanalysen z.B. an einem Getriebe angeführt werden. Durch die Parameteränderung zur Laufzeit können Einflüsse der Motorkonfiguration auf das Geräuschverhalten eindeutig identifiziert werden. Bisherige Ansätze erfordern eine Parameteränderung im Stillstand, wodurch entscheidende Randbedingungen wie die Öltemperatur verändert werden.

Das Verfahren ermöglicht Parametervariationen direkt im Betrieb, wodurch zunächst ein deutlich erhöhter Bedienkomfort im Vergleich zu bisherigen Ansätzen mit Offline-Simulation und Kennfeldaustausch erreicht wird. Die flexible und universelle Implementierung des Echtzeitmodells erlaubt dabei die Einstellung eines beliebigen 4-Takt-Verbrennungsmotors zur Laufzeit, unabhängig von Kraftstoffart, Zylinderzahl, Verdichtungsverhältnis usw. Auch die Abbildung von einer Zylinderabschaltung und von Fehlzündungen ist im Rahmen dieses Verfahrens möglich.

Durch die optionale Echtzeitsimulation des Torsionsschwingungsdämpfers können Versuchsaufbauten je nach Zielsetzung des Versuchs flexibel mit und ohne realen Dämpfer ausgeführt werden. Dies erlaubt eine optimale Ausnutzung der Drehmomentdynamik der elektrischen Prüfstandmotoren, beispielsweise bei Getriebe-Dauerlauf- und -Geräuschanalysen. Oftmals lassen sich die Drehmomentspitzen und die damit verbundenen Drehungleichförmigkeiten moderner hochaufgeladener Motoren am Kurbelwellenende mit elektrischen Antrieben nicht vollständig darstellen. Die Dynamik am Ausgang des Torsionsschwingungsdämpfers ist naturgemäß geringer.

Hervorzuheben ist zudem die direkte Wechselwirkung zwischen virtuellem Verbrennungsmotor und physischem Prüfling durch Nutzung gemessener Sensorsignale zur teilphysikalischen Echtzeitberechnung des effektiven Drehmoments bzw. des Solldrehmoments für den Prüfstandmotor. Dadurch können realitätsnahe Betriebszustände am Prüfstand eingestellt werden, vor allem auch hinsichtlich transienter Vorgänge wie Motorstart und -stopp und Resonanzdurchläufe am Torsionsschwingungsdämpfer und Abbildung von Funktionsstörungen.

Kern des vorgestellten Verfahrens ist die Implementierung eines detaillierten und universellen Verbrennungsmotor-Echtzeitmodells mit Fokus auf die Simulation von Drehungleichförmigkeiten. Die Herausforderung besteht darin, die Echtzeitberechnung mit konventionellen, d.h. wirtschaftlichen Hardwareplattformen zu ermöglichen.

Demgegenüber steht die Anforderung nach einer maximalen Komplexität eines Motors mit zwölf Zylindern sowie der Universalität des Modells für alle Motortypen. Dadurch, dass sämtliche Motorparameter, d.h. auch die Zylinderzahl und die Kraftstoffart, im Betrieb umschaltbar sein sollen, ist eine Kompilierung des Ausgangsmodells und eine damit verbundene Codeoptimierung auf eine bestimmte Modellkonfiguration hin nicht möglich.

Die Aufgabe wird im Rahmen des Verfahrens durch eine Modellstruktur gelöst, die durch die parallelisierte und modulare Berechnung der einzelnen Arbeitsschritte im Motor eine maximale Universalität und Flexibilität zur Abbildung verschiedener Motortypen, -bauformen und -varianten gewährleistet. Dabei werden die einzelnen Motorvorgänge (Ansaugen, Komprimieren, Verbrennen, Expansion, Ausstoßen) von bis zu zwölf Zylindern parallel gerechnet. Durch konsequente Deaktivierung von Modellanteilen der jeweils abgeschlossenen Vorgänge, die nicht mehr zum Tragen kommen während der Simulation, wird auch bei der Einstellung eines Zwölfzylindermotors eine maximale Rechenzeit von unter 200 µs erreicht.

Die Nutzung eines leistungsfähigen Feldbussystems und einer FPGA-basierten Sensorauswertung steht in Zusammenhang mit der Minimierung der Verarbeitungszeit zur Erzeugung aktueller Sollwerte für die Prüfstandmotoren aus gemessenen Signalen. Eine Minimierung der Verarbeitungs- und Übertragungszeit ist für eine realistische Verbrennungsmotorabbildung im Frequenzbereich bis 500 Hz elementar. Bei den bisherigen Ansätzen ist Sollwerterzeugung aus der Ist-Drehzahl über die Kennfelder in der Leistungselektronik, d.h. nah an den Leistungsendstufen, integriert. Nachteile dieser Lösungen sind die schlechte Flexibilität hinsichtlich der Kennfeldvariation bzw. der dabei entstehende zeitliche Aufwand.

Die Implementierung und die Nutzung einer Echtzeitplattform mit Möglichkeit zur Laufzeit-Parametervariation erlaubt somit eine Onlineveränderung sämtlicher Motor-, Torsionsschwinger- und Simulationsparameter.

Vorteilhaft kann es hierzu auch sein, wenn mechanische Prüfstände verwendet werden, bei denen eine mechanische Kopplung zwischen dem simulierten Verbrennungsmotor und dem angetriebenen Prüfling erfolgt. Bisher ist eine kennfeldfreie Simulation nur für Motorsteuerungen bekannt. Der Einsatz für physikalische Prüflinge bringt die vorstehend genannten Vorteile mit sich.

Ferner kann es vorteilhaft sein, wenn eine Kombination einer Echtzeitsimulation auf Basis kennfeldfreier parametrierbarer Motorgrößen mit einem mechanischen Prüfstand erfolgt. Der Fokus liegt hierbei auf der Simulation von Drehungleichförmigkeiten des Verbrennungsmotors.

Der maßgebende Unterschied liegt in der Echtzeitberechnung des Verbrennungsmotorverhaltens. Im Stand der Technik wird das dynamische Verbrennungsmotorverhalten vorab aus Messungen oder Offline-Simulationen ermittelt und in Kennfelder überführt. Diese Kennfelder oder Kennlinien werden im Versuch mehr oder weniger abgespielt, mit dem Nachteil, dass eine Variation der Motorcharakteristik, z.B. zur Darstellung einer Zylinderdeaktivierung oder einer Fehlzündung, nicht möglich ist.

Die Notwendigkeit dieser Onlinevariation ist bei der Darstellung einer Fehlzündung offensichtlich, z.B. zur Analyse akustischer oder schwingungstechnischer Auswirkungen mit Auswirkung auf Komfort und Festigkeit. Aber auch bei anderen Versuchen ist die direkte und zeitlich unmittelbare Gegenüberstellung verschiedener Motorcharakteristika erforderlich - als Beispiel können akustische Vergleichsanalysen (z.B. mit Getrieberasseln) angeführt werden, bei denen es elementar wichtig ist, dass das Getriebe als Prüfling einen möglichst konstanten Zustand hat. Unser Verfahren ermöglicht eine direkte Variation der Charakteristika, bei anderen Verfahren wird Zeit zur Kennfeldübertragung benötigt, in der sich z.B. Änderungen in der Getriebeöltemperatur ergeben.

Im Zusammenhang mit der Echtzeitsimulation des Verbrennungsmotorverhaltens ist natürlich auch die Echtzeitsimulation des Torsionsschwingungsdämpfers bzw. des Zweimassenschwungrades (ZMS) ein wesentliches Kriterium.

Vorteilhaft kann es auch sein, wenn als Antriebsmotor ein permanent erregter Synchronmotor mit geringem Rotorträgheitsmoment und hoher Drehmomentkapazität verwendet wird. Somit ist die Abbildung realer Kurbelwellen einerseits und Drehmomentspitzen des Verbrennungsmotors andererseits gewährleistet.

Dabei kann es vorteilhafterweise vorgesehen sein, dass eine Leistungselektronik mit hochdynamischer Stromregelung und minimaler Stromanstiegszeit verwendet wird, wobei die minimale Stromstellabweichung cd < 1 % ist und die Stromanstiegszeit cr <= 1 ms ist.

Von besonderer Bedeutung kann für die vorliegende Erfindung sein, wenn ein Feldbussystem (EtherCAT) zur Sollwertkommunikation verwendet wird, mit mindestens 5 kHz Datenfrequenz. Somit ist ausgehend von der Echtzeitplattform eine ausreichend schnelle Regelung der Leistungselektronik möglich.

Im Zusammenhang mit der erfindungsgemäßen Ausbildung und Anordnung kann es von Vorteil sein, wenn eine kennfeldfreie Parametrierung von einem oder mehreren der folgenden Motor- und Simulationsparameter online erfolgt: Max. Kraftstoffmenge pro Zylinder pro Arbeitsspiel im Leerlauf, Nenndrehzahl des Motors, Anzahl der Zylinder, Gesamthubraum, Totvolumen pro Zylinder, Kolbenfläche, Ein- und Auslassventildurchmesser, Reibmitteldruck bei Referenzdrehzahl, Referenzdrehzahl zur Berechnung des Reibmitteldruckes, Konstante zur Berechnung des Reibmitteldruckes, Starterdrehzahl, Kurbelwinkel-Einlass öffnet, Kurbelwinkel-Einlass schließt, Kurbelwinkel-Auslass öffnet, Kurbelwinkel-Auslass schließt, Kurbelwinkel-Brennbeginn, Kurbelwinkel-Brennende, Pleuellänge, Kurbelwangenradius, Desachsierung des Kolbenbolzens, Oszillierende Masse pro Zylinder, Rotierende Masse pro Zylinder, Unterer Heizwert des Kraftstoffs, Spezifische Wärmekapazität des Kraftstoffs, Verhältnis der spezifischen Wärmekapazitäten, Einlasstemperatur in den Zylinder, Umgebungsdruck, Einlassdruck in den Zylinder, Vibe Parameter, Vibe Formparameter, Umsetzrate, Primär- und Sekundärmasse des Torsionsschwingungsdämpfers, Federkennlinie des Torsionsschwingungsdämpfers über den Verdrehwinkel, Spiel im Torsionsschwingungsdämpfer, Reibungscharakteristik des Torsionsschwingungsdämpfers über dem Verdrehwinkel, Durchmesser des Bogenfederkanals, Reibwert der Bogenfeder und des Bogenfederkanals, Masse der Bogenfedern, Rotorträgheit des Prüfstandmotors, Nenn- und maximales Drehmoment des Prüfstandmotors, Nenn- und maximale Drehzahl des Prüfstandmotors, Maximale erlaubte Anregungsfrequenz des Prüfstandmotors.

Die Implementierung und die Nutzung einer Echtzeitplattform mit Möglichkeit zur Laufzeit-Parametervariation erlaubt somit eine Onlineveränderung sämtlicher Motor-, Torsionsschwinger- und Simulationsparameter:

Vorteilhaft kann es ferner sein, wenn ein paralleles Rechnen von einzelnen Motorabläufen, insbesondere der Kompression, der Expansion, der Verbrennung, des Ansaugens und des Ausstoßens erfolgt. Dies lässt die Abbildung von Betriebszuständen wie Zylinderabschaltung mit geschlossenen Ventilen zu.

Außerdem kann es vorteilhaft sein, wenn eine Berechnung des effektiven Drehmoments als Sollwert für den Prüfstandmotor auf Basis der vorstehend genannten Modellparameter und der gemessenen Motor-Ist-Drehzahl und des Drehwinkels des Motors erfolgt.

Ferner kann es vorteilhaft sein, wenn die Auswahl der Zylinderzahl sowie der Kraftstoffart im Simulationsmodus erfolgt. Die unterschiedlichen Einflüsse dieser Motorvarianten auf den Prüfling lassen sich somit unter exakt den gleichen Bedingungen aufzeigen und vergleichen.

Dabei kann es von Vorteil sein, wenn ein Torsionsschwinger zur Abbildung eines Zweimassenschwungrades ZMS ebenfalls kennfeldfrei simuliert wird. Eine solche Vorgehensweise war bisher nicht möglich.

Weitere Vorteile und Einzelheiten der Erfindung sind in den Patentansprüchen und in der Beschreibung erläutert und in den Figuren dargestellt. Es zeigt:
- **Figur 1**: Powerpack-Prüfstand-Topologie;
- **Figur 2**: eDriL-Beispieltopologie;
- **Figur 3**: Darstellung des Verbrennungsmotormodells;
- **Figur 4**: Visualisierung des Verfahrens zur Verbrennungsmotorsimulation.

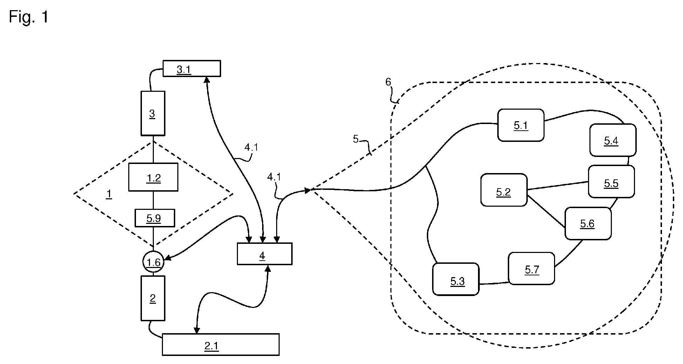

Ein Powerpack-Prüfstand ist ein Zwei-Motoren-Prüfstand zur Analyse von Kupplungs- und Dämpfersystemen. Die Powerpack-Prüfstand-Topologie nach **Figur 1** weist eine physische Domäne **1** auf, die im Wesentlichen aus einer Kupplung **1.2** und einem Zweimassenschwungrad **5.9** besteht. Daran schließen an ein Antriebsmodul **2** und ein Abtriebsmodul **3,** wobei das Abtriebsmodul **3** einen Belastungsmotor aufweist, der die Abtriebsleistung aufnimmt. Antriebs- und Abtriebsmodul **2, 3** sind über eine entsprechende Leistungselektronik **2.1, 3.1,** über einen Switch **4** und ein Ethernet I/O **4.1** mit der simulierten Umgebung bzw. einer virtuellen Domäne **5** gekoppelt. In der Domäne **5** werden verschiedenste Parameter abgebildet. Hierzu zählen ein Getriebe **5.3,** ein Motor **5.1,** ein Chassis **5.2,** Fahrerverhalten **5.4,** Umgebung **5.5,** Räder **5.6** und weitere Übertragungsglieder wie Wellen **5.7.** Diese Domäne **5** wird über eine Echtzeitumgebung **6** zur Verfügung gestellt, in der die gewünschten Parameter in Echtzeit während der Simulation verändert werden können.

Das Simulationsverfahren wurde bereits an zwei neuen Entwicklungsprüfständen umgesetzt und getestet. Beide Prüfstände sind mit einer ähnlichen Automatisierungstopologie ausgestattet. Eine Echtzeitplattform ADwin der Firma Jäger, Computergesteuerte Messtechnik zur Kompilierung und Echtzeitberechnung von Verbrennungsmotormodellen mit Treiberanbindung zur Online-Parametervariation, EtherCAT Feldbus mit Etherlab Masterimplementierung zur Gewährleistung von ausreichend hoher Sollwertübertragungsrate (5-kHz), Unico Leistungselektronik mit minimaler Stromanstiegszeit (< 1ms) für maximale Drehmomentdynamik und hoher Halbleiter (IGBT)-Schaltfrequenz zur Darstellung hochfrequenter Drehmomentanteile, permanent magneterregte Synchronmotoren für maximale Leistungsdichte und Powerpack-Prüfstand.

Die technischen Daten des Powerpack-Prüfstands sind wie folgt.
Prüfstandmotoren: Nennleistung: je 209 kW, Maximaldrehzahl: 9000 U/min, Maximaldrehmoment 500 Nm, Drehmomentanregung pis 500 Hz, Rotorträgheit 0,029 kgm2.
Leistungselektronik: Nennleistung: je 368 kW, IGBT Frequenz 8000 Hz, Strom-Einregelzeit: 1ms, Strom-Anstiegszeit cr < 1ms.
EtherCAT Feldbus: Kommunikationsfreguenz 5 kHz. Echtzeit-Umgebung: Jäger ADwin PRO 11, Modulare I/O Schnittstellen, MATLAB / Simulink Modelle.

Der eDrive-in-the-Loop Prüfstand (eDriL) ist als Multifunktionsprüfstand für konventionelle, hybride und konventionelle Antriebssysteme mit einem hochdynamischen Antriebsmotor zur Verbrennungsmotorabbildung ausgestattet.

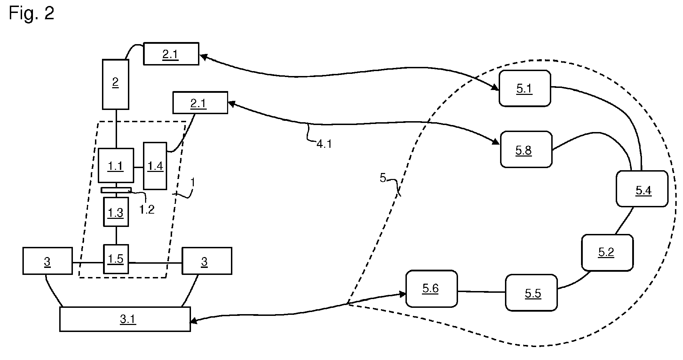

Eine beispielhafte Konfiguration für einen hybriden Antriebsstrang mit Simulation des Verbrennungsmotorverhaltens ist in **Figur 2** dargestellt. Die physische Domäne **1** wird im Wesentlichen gebildet aus dem Prüfstandmotor **1.1** und dem über die Kupplung **1.2** angeschlossenen Prüfling **1.3** sowie einem zweiseitigen Abtriebsstrang **1.5** wie ein Differential und einer Leistungselektronik **1.4.** Die virtuelle Domäne **5** ergibt sich ähnlich wie in **Figur 1****.** Enthalten ist hier zudem die Parameterumgebung Batterie und Management **5.8,** die zusammen mit dem Motor **5.1** unmittelbar mit dem Fahrerverhalten **5.4** gekoppelt ist.

Die Leistungselektronik und die Infrastruktur des eDril sind weitestgehend mit der des Powerpack-Prüfstandes identisch. Der Prüfstandmotor zur Verbrennungsmotorabbildung unterscheidet sich in erster Linie durch die Maximaldrehzahl von 20.000 U/min, das maximale Drehmoment von 600 Nm und die Rotorträgheit von 0,05 kgm². Erfindungsgemäss kann die Rotorträgheit im Bereich der Verbrennungsmotorkurbelwellen zwischen 0,02 kgm² bis 0,1 kgm². Die Maximal-Drehmomente, wie im Überlastbetrieb der Elektromotoren, liegen dabei zwischen 400 Nm bis 1500 Nm.

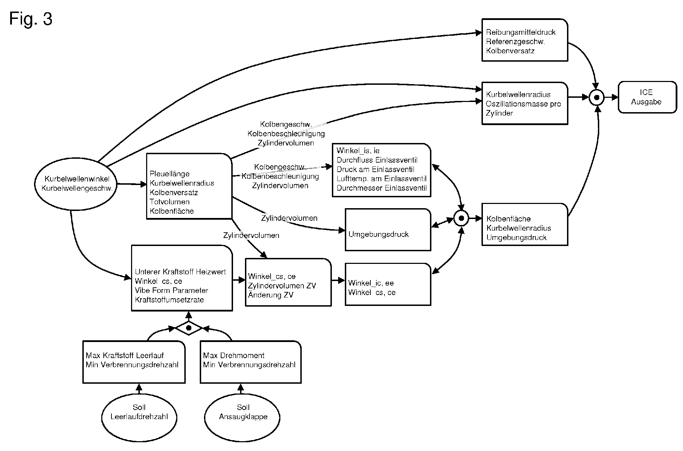

Die Implementierung des Verbrennungsmotor-Echtzeitmodells ist schematisch in **Figur 3** dargestellt. Ausgehend vom Öffnungswinkel der Ansaugklappe als maßgebender Eingabeparameter des Fahrers wird ein ICE-Ausgabewert für den Prüfstandmotor generiert, der das Verhalten des simulierten Verbrennungsmotors wiedergibt. Dargestellt ist die Signalverarbeitung vom gemessenen Signal zum Sollwert. Die zugrunde liegende Modellstruktur gewährleistet aufgrund der parallelen und modularen Berechnung und Simulation der einzelnen Arbeitsschritte im Verbrennungsmotor eine maximale Universalität und Flexibilität zur Abbildung verschiedener Motortypen, -bauformen und -varianten.

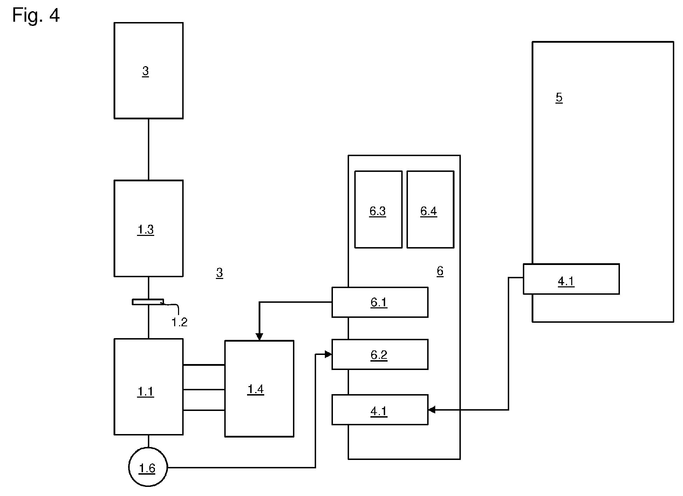

**Figur 4** zeigt eine Visualisierung des Verfahrens zur Verbrennungsmotorsimulation. Darin werden die wesentlichen Unterscheidungsmerkmale zum Stand der Technik deutlich. Die Echtzeitberechnung des Verbrennungsmotorverhaltens erfolgt in Echtzeit und kennfeldfrei. Bei den bekannten Verfahren aus dem Stand der Technik wird das dynamische Verbrennungsmotorverhalten vorab aus Messungen oder Offline-Simulationen ermittelt und in Kennfelder überführt. An den Prüfstandmotor **1.1** ist der Prüfling **1.3** gekoppelt, dessen Abtriebsleistung an einen Belastungsmotor **3** abgegeben wird. Der Prüfstandmotor **1.1** ist direkt über drei Phasen mit der Leistungselektronik **1.4** verbunden. Die Motorparameter und das Verhalten des Motors werden über ein EtherCAT Interface **6.1** mit einer Sollwertübertragung von 5 kHz direkt auf der Echtzeitplattform **6** abgebildet. Die Echtzeitplattform **6** beinhaltet ein Echtzeitverbrennungsmotormodell **6.3** und wahlweise ein Echtzeittorsionsschwingungsdämpfermodell **6.4.** Hierzu ist eine Drehgeberschnittstelle **6.2** vorgesehen, die die Impulse eines Drehgebers **1.6** aufnimmt. Über das Ethernet I/O **4.1** wird die Bedienerschnittstelle, mithin die virtuelle Domäne 5 versorgt, über die die Online-Erstellung der Motorparameter erfolgt.

### Bezugszeichenliste

- 1: Physische Domäne
- 1.1: Prüfstandmotor, Belastungseinrichtung, Elektromotor
- 1.2: Kupplung
- 1.3: Prüfling, Kraftfahrzeug-Getriebe
- 1.4: Leistungselektronik
- 1.5: Abtriebsstrang
- 1.6: Drehgeber
- 2: Antriebsmodul
- 2.1: Leistungselektronik
- 3: Abtriebsmodul, Belastungsmotor
- 3.1: Leistungselektronik
- 4: Switch
- 4.1: Ethernet I/O
- 5: Virtuelle Domäne
- 5.1: Motor
- 5.2: Chassis
- 5.3: Getriebe
- 5.4: Fahrerverhalten
- 5.5: Umgebung
- 5.6: Räder
- 5.7: Wellen
- 5.8: Batterie und Management
- 5.9: Zweimassenschwungrad, ZMS
- 6: Echtzeitumgebung, Echtzeitplattform
- 6.1: EtherCAT Interface, Feldbussystem
- 6.2: Drehgeberschnittstelle
- 6.3: Echtzeitverbrennungsmotormodell
- 6.4: Echtzeittorsionsschwingungsdämpfermodell

## Patentansprüche

1. Verfahren zur teilphysikalischen Echtzeitsimulation (HIL) eines Verbrennungsmotors als Belastungseinrichtung zum Prüfen eines Prüflings (Antriebsteilsystems) **(1.3),** bei dem ein realer Verbrennungsmotor durch einen elektrischen Antriebsmotor als Prüfstandmotor **(1.1)** ersetzt und simuliert wird, wobei verschiedene Motorgrößen dem Grunde nach und der Charakteristik nach simuliert werden, wobei
- ein kompilierungsfreies Ausgangsmodell verwendet wird;
- eine code-freie Modellkonfiguration verwendet wird;
- eine Deaktivierung abgeschlossener Vorgänge erfolgt;
- ein paralleles Simulieren der einzelnen Motorparameter erfolgt;
- die Motorgrößen in Echtzeit kennfeldfrei parametriert werden.

2. Verfahren nach Anspruch 1,
**dadurch gekennzeichnet,**
**dass** mechanische Prüfstände verwendet werden, bei denen eine mechanische Kopplung zwischen dem simulierten Verbrennungsmotor und dem angetriebenen Prüfling (1.3) erfolgt.

3. Verfahren nach Anspruch 1 oder 2,
**dadurch gekennzeichnet,**
**dass** eine Kombination einer Echtzeitsimulation auf Basis kennfeldfreier parametrierbarer Motorgrößen mit einem mechanischen Prüfstand erfolgt.

4. Verfahren nach einem der vorhergehenden Ansprüche,
**dadurch gekennzeichnet,**
**dass** als Antriebsmotor ein permanent erregter Synchronmotor mit einem Rotorträgheitsmoment zwischen 0,02 kgm² und 0,08 kgm² und einer Drehmomentkapazität zwischen 500 Nm bis 1500 Nm verwendet wird.

5. Verfahren nach einem der vorhergehenden Ansprüche,
**dadurch gekennzeichnet,**
**dass** eine Leistungselektronik (1.4) mit hochdynamischer Stromregelung und minimaler Stromanstiegszeit verwendet wird, wobei die minimale Stromstellabweichung cd < 1 % ist und die Stromanstiegszeit cr <= 1ms ist.

6. Verfahren nach einem der vorhergehenden Ansprüche,
**dadurch gekennzeichnet,**
**dass** ein Feldbussystem (EtherCAT) (6.1) zur Sollwertkommunikation verwendet wird, mit mindestens 5 kHz Datenfrequenz.

7. Verfahren nach einem der vorhergehenden Ansprüche,
**dadurch gekennzeichnet,**
**dass** eine kennfeldfreie Parametrierung von einem oder mehreren der folgenden Motor- und Simulationsparameter online erfolgt: Max. Kraftstoffmenge pro Zylinder pro Arbeitsspiel im Leerlauf, Nenndrehzahl des Motors, Anzahl der Zylinder, Gesamthubraum, Totvolumen pro Zylinder, Kolbenfläche, Ein- und Auslassventildurchmesser, Reibmitteldruck bei Referenzdrehzahl, Referenzdrehzahl zur Berechnung des Reibmitteldruckes, Konstante zur Berechnung des Reibmitteldruckes, Starterdrehzahl, Kurbelwinkel-Einlass öffnet, Kurbelwinkel-Einlass schließt, Kurbelwinkel-Auslass öffnet, Kurbelwinkel-Auslass schließt, Kurbelwinkel-Brennbeginn, Kurbelwinkel-Brennende, Pleuellänge, Kurbelwangenradius, Desachsierung des Kolbenbolzens, Oszillierende Masse pro Zylinder, Rotierende Masse pro Zylinder, Unterer Heizwert des Kraftstoffs, Spezifische Wärmekapazität des Kraftstoffs, Verhältnis der spezifischen Wärmekapazitäten, Einlasstemperatur in den Zylinder, Umgebungsdruck, Einlassdruck in den Zylinder, Vibe Parameter, Vibe Formparameter, Umsetzrate, Primär- und Sekundärmasse des Torsionsschwingungsdämpfers, Federkennlinie des Torsionsschwingungsdämpfers über den Verdrehwinkel, Spiel im Torsionsschwingungsdämpfer, Reibungscharakteristik des Torsionsschwingungsdämpfers über dem Verdrehwinkel, Durchmesser des Bogenfederkanals, Reibwert der Bogenfeder und des Bogenfederkanals, Masse der Bogenfedern, Rotorträgheit des Prüfstandmotors (1.1), Nenn- und maximales Drehmoment des Prüfstandmotors (1.1), Nenn- und maximale Drehzahl des Prüfstandmotors (1.1), Maximale erlaubte Anregungsfrequenz des Prüfstandmotors (1.1).

8. Verfahren nach einem der vorhergehenden Ansprüche,
**dadurch gekennzeichnet,**
**dass** ein paralleles Rechnen von einzelnen Motorabläufen, insbesondere der Kompression, der Expansion, der Verbrennung, des Ansaugens und des Ausstoßens erfolgt.

9. Verfahren nach einem der vorhergehenden Ansprüche,
**dadurch gekennzeichnet,**
**dass** eine Berechnung des effektiven Drehmoments als Sollwert für den Prüfstandmotor (1.1) auf Basis der Modellparameter und der gemessenen Motor-Ist-Drehzahl und des Drehwinkels erfolgt.

10. Verfahren nach einem der vorhergehenden Ansprüche,
**dadurch gekennzeichnet,**
**dass** die Auswahl der Zylinderzahl sowie der Kraftstoffart im Simulationsmodus erfolgt.

11. Verfahren nach einem der vorhergehenden Ansprüche,
**dadurch gekennzeichnet,**
**dass** ein Torsionsschwinger zur Abbildung eines Zweimassenschwungrades ebenfalls kennfeldfrei simuliert wird.

12. Verwendung einer Echtzeitmotorsimulation eines Verbrennungsmotors mit kennfeldfreier Parametrierung zum Prüfen eines physikalischen Prüflings **(1.3),** wobei der Prüfling **(1.3)** über eine Kupplung **(1.2)** an den Prüfstandmotor **(1.1)** mechanisch gekoppelt ist.
